# EUROPEAN PATENT APPLICATION

(11) **EP 4 534 343 A1**
(43) Date of publication of application: **09.04.2025**
(21) Application number: 23810672.8
(22) Date of filing: 03.04.2023
(51) Int. Cl.: B60L 58/27

(54) **BATTERY ENERGY PROCESSING APPARATUS AND VEHICLE**

(30) Priority: 25.05.2022 CN 202210583659
(71) Applicant: BYD Company Limited, Shenzhen, Guangdong 518118 (CN)
(72) Inventor: XU, Luhui, Shenzhen, Guangdong 518118 (CN); DU, Zhiyong, Shenzhen, Guangdong 518118 (CN); REN, Shaopeng, Shenzhen, Guangdong 518118 (CN)
(74) Representative: Mathys & Squire
(86) International application number: PCT/CN2023/086032
(87) International publication number: WO 2023/226597

(57) **Abstract**

A battery energy processing apparatus and a vehicle. The apparatus comprises: an inverter, an energy storage element and a controller. In a first preset state, the controller is used for controlling the inverter to enable the energy storage element to be charged and discharged by a battery so as to realize self-heating of the battery; in a second preset state, at least part of the energy storage element and at least part of the inverter jointly form an adaptive voltage charger, and the controller is used for controlling the adaptive voltage charger to charge the battery.

## Description

### CROSS-REFERENCE TO RELATED APPLICATIONS

The present disclosure claims priority to and benefits of Chinese Patent Application No. 202210583659.9, filed on May 25, 2022 and entitled "BATTERY ENERGY PROCESSING APPARATUS AND VEHICLE". The entire content of the above-referenced application is incorporated herein by reference.

### FIELD

The present disclosure relates to the field of vehicle technologies, and specifically, to a battery energy processing apparatus and a vehicle.

### BACKGROUND

A power battery equipped on an electric vehicle has severe performance attenuation during charging and discharging in a low-temperature environment, and as a result the capability of a driving system or a charging system is restricted in the low-temperature environment, which severely degrades user experience.

To reduce restrictions of a low-temperature environment on a power battery, some heating solutions for a power battery are proposed. In addition, a fast charge function for a power battery is also an essential function for a new energy vehicle.

Therefore, it is presently urgent to seek for a technical solution that gives consideration to both charging and heating.

### SUMMARY

In order to overcome the problems in the related art, the present disclosure provides a battery energy processing apparatus and a vehicle.

In order to realize the objective, on a first aspect, the present disclosure provides a battery energy processing apparatus, including:
an inverter, a first terminal of the inverter being configured to be connected to a battery;
an energy storage element, a first terminal of the energy storage element being configured to be connected to an external power supply device, a second terminal of the energy storage element being connected to a second terminal of the first terminal of the inverter; and
a controller, the controller being connected to a third terminal of the inverter.

In a first preset state, the controller controls the inverter to enable the energy storage element to be charged and discharged by the battery so as to realize self-heating of the battery.

In a second preset state, at least part of the energy storage element and at least part of the inverter jointly form an adaptive voltage charger, and the controller controls the adaptive voltage charger to charge the battery.

Optionally, the inverter includes at least two-phase bridge arms, the energy storage element includes at least two coils, a quantity of the at least two-phase bridge arms is the same as that of the at least two coils, a quantity of at least one-phase bridge arm of the at least two-phase bridge arms is the same as that of at least one coil of the at least two coils, and the at least one-phase bridge arm and the at least one coil jointly form the adaptive voltage charger.

Optionally, first bus terminals of the at least two-phase bridge arms are connected to a positive electrode of the battery, and second bus terminals of the at least two-phase bridge arms are connected to a negative electrode of the battery and a negative electrode of the external power supply device.

Second terminals of the at least two coils are connected to midpoints of the at least two-phase bridge arms, first terminals of the at least two coils are connected together to form a neutral point, and the neutral point is configured to be connected to a positive electrode of the external power supply device.

Optionally, in the first preset state, the controller controls at least two-phase bridge arms of the at least two-phase bridge arms to enable coils connected to the at least two-phase bridge arms of the at least two coils to be charged and discharged by the battery so as to realize the self-heating of the battery.

Optionally, when a voltage of the external power supply device is less than a voltage of the battery, in the second preset state, at least one-phase bridge arm of the at least two-phase bridge arms and at least one coil of the at least two coils jointly form the adaptive voltage charger, and the controller controls an upper bridge arm of the at least one-phase bridge arm to be turned off and a lower bridge arm of the at least one-phase bridge arm to be turned on to charge the at least one coil.

Optionally, when the voltage of the external power supply device is less than the voltage of the battery, in the second preset state, after the at least one coil is charged, the controller further controls the lower bridge arm of the at least one-phase bridge arm to be turned off and controls a current to pass through a freewheeling diode of the upper bridge arm of the at least one-phase bridge arm to boost-charge the battery.

Optionally, the controlling the current to pass through the freewheeling diode of the upper bridge arm of the at least one-phase bridge arm to boost-charge the battery includes: controlling an insulated gate bipolar transistor of the upper bridge arm of the at least one-phase bridge arm not to be turned on to control the current to pass through the freewheeling diode of the upper bridge arm of the at least one-phase bridge arm to boost-charge the battery.

Optionally, when the voltage of the external power supply device is not less than the voltage of the battery, in the second preset state, the controller controls insulated gate bipolar transistors of upper and lower bridge arms of the at least two-phase bridge arms not to be turned on to control currents to pass through freewheeling diodes of upper bridge arms of the at least two-phase bridge arms to directly charge the battery.

Optionally, the apparatus further includes: at least two first switches, first terminals of the at least two first switches being configured to be connected to the positive electrode of the external power supply device, and second terminals of the at least two first switches being connected to the first terminals of the at least two coils in a one-to-one correspondence.

Optionally, in the first preset state, the controller controls first switches of the at least two first switches correspondingly connected to at least two coils of the at least two coils to close, and controls at least two-phase bridge arms connected to the at least two coils of the at least two-phase bridge arms to enable the at least two coils to be charged and discharged by the battery so as to realize the self-heating of the battery.

In the second preset state, at least one coil of the at least two coils and at least one-phase bridge arm correspondingly connected to the at least one coil jointly form the adaptive voltage charger, and the controller controls a first switch of the at least two first switches correspondingly connected to the at least one coil to close, and controls the adaptive voltage charger to charge the battery.

Optionally, in the second preset state, a non-faulty bridge arm of the at least two-phase bridge arms and a coil of the at least two coils connected to the non-faulty bridge arm jointly form the adaptive voltage charger, and the controller controls a first switch of the at least two first switches correspondingly connected to a coil connected to a faulty bridge arm to open, controls a first switch of the at least two first switches correspondingly connected to a coil connected to a non-faulty bridge arm to close, and controls the adaptive voltage charger to charge the battery.

Optionally, the energy storage element further includes a first capacitor.
a first terminal of the first capacitor is connected to the neutral point and the positive electrode of the external power supply device, and a second terminal of the first capacitor is connected to the negative electrode of the battery and the negative electrode of the external power supply device.

Optionally, in the first preset state, the controller controls at least one-phase bridge arm of the at least two-phase bridge arms to enable the first capacitor to be charged and discharged by the battery so as to realize the self-heating of the battery.

In the second preset state, at least one coil of the at least two coils and at least one-phase bridge arm correspondingly connected to the at least one coil jointly form the adaptive voltage charger, and the controller controls the adaptive voltage charger to charge the battery.

Optionally, the apparatus further includes:
the at least two first switches, the first terminals of the at least two first switches being configured to be connected to the positive electrode of the external power supply device, and the second terminals of the at least two first switches being connected to the first terminals of the at least two coils in a one-to-one correspondence.

In the first preset state, the controller controls a first switch of the at least two first switches correspondingly connected to a coil connected to a faulty bridge arm to open, controls a first switch of the at least two first switches correspondingly connected to a coil connected to a non-faulty bridge arm to close, and controls a non-faulty bridge arm of the at least two-phase bridge arms to enable the first capacitor to be charged and discharged by the battery so as to realize the self-heating of the battery.

Optionally, the apparatus further includes:
the at least two first switches, the first terminals of the at least two first switches being configured to be connected to the positive electrode of the external power supply device, and the second terminals of the at least two first switches being connected to the first terminals of the at least two coils in a one-to-one correspondence; and
a second switch, a first terminal of the second switch being connected to the neutral point, and a second terminal of the second switch being configured to be connected to the positive electrode of the external power supply device.

The energy storage element further includes the first capacitor. The first terminal of the first capacitor is connected to the neutral point and the positive electrode of the external power supply device, and the second terminal of the first capacitor is connected to the negative electrode of the battery and the negative electrode of the external power supply device.

In the first preset state, in response to receiving a first control instruction configured for indicating to perform inductive self-heating on the battery, the controller controls first switches of the at least two first switches correspondingly connected to at least two coils of the at least two coils to close, controls the second switch to open, and controls at least two-phase bridge arms connected to the at least two coils of the at least two-phase bridge arms to enable the at least two coils to be charged and discharged by the battery so as to realize the self-heating of the battery.

In the first preset state, in response to receiving a second control instruction configured for indicating to perform capacitive self-heating on the battery, the controller controls a first switch of the at least two first switches correspondingly connected to a coil connected to at least one-phase bridge arm to close, controls the second switch to close, and controls the at least one-phase bridge arm of the at least two-phase bridge arms to enable the first capacitor to be charged and discharged by the battery so as to realize the self-heating of the battery.

On a second aspect, the present disclosure provides a vehicle, including:
a battery; and
the battery energy processing apparatus according to the first aspect of the present disclosure.

In the foregoing technical solution, the battery energy processing apparatus includes the inverter, the energy storage element, and the controller. The inverter is connected to the battery and the energy storage element. The energy storage element is connected to the external power supply device. In the first preset state, the controller controls the inverter to enable the energy storage element to be charged and discharged by the battery so as to realize the self-heating of the battery. In this way, in the first preset state, electricity in the battery may be cycled between the battery and the energy storage element by using the energy storage element to realize the charging and discharging of the battery. In this way, the self-heating of the battery is realized to better maintain the temperature of the battery and increase the electrolyte activity and the electrochemical reaction rate of a lithium-ion battery, thereby ensuring the driving capability of a driving system of an electric vehicle. In addition, the self-heating of the battery has a small energy loss, uniform heat transfer, and high heating efficiency. In addition, in the second preset state, at least part of the energy storage element and at least part of the inverter jointly form the adaptive voltage charger, and the controller controls the adaptive voltage charger to charge the battery. In other words, one battery energy processing apparatus is used for both battery charging and battery self-heating. In this way, the multifunctional reuse of the battery energy processing apparatus is realized, thereby reducing the costs and sizes of components.

Other features and advantages of the present disclosure will be described in detail in the following detailed description.

### BRIEF DESCRIPTION OF THE DRAWINGS

The accompanying drawings are provided to further understand the present disclosure, and they constitute a part of the specification. The accompanying drawings, along with the specific implementations, are used to explain the present disclosure, and pose no limitation on the present disclosure. In the figures:
FIG. 1 is a structural block diagram of a battery energy processing apparatus according to an exemplary embodiment;
FIG. 2 is a circuit topology diagram of a battery energy processing apparatus according to an exemplary embodiment;
FIG. 3 and FIG. 4 are schematic diagrams of a working principle of boost-charging a battery in a second preset state according to an exemplary embodiment;
FIG. 5 is a circuit topology diagram of a battery energy processing apparatus according to another exemplary embodiment;
FIG. 6 is a circuit topology diagram of a battery energy processing apparatus according to another exemplary embodiment;
FIG. 7 is a circuit topology diagram of a battery energy processing apparatus according to another exemplary embodiment;
FIG. 8 to FIG. 11 are schematic diagrams of a working principle of heating a battery by the battery energy processing apparatus shown in FIG. 7 in a first preset state according to an exemplary embodiment;
FIG. 12 is a circuit topology diagram of a battery energy processing apparatus according to another exemplary embodiment;
FIG. 13 is a circuit topology diagram of a battery energy processing apparatus according to another exemplary embodiment;

### DETAILED DESCRIPTION

The following describes the specific implementations of the present disclosure in detail with reference to the accompanying drawings. It should be understood that the specific implementations described herein are merely used to describe and explain the present disclosure, but are not intended to limit the present disclosure.

It should be noted that all actions of obtaining a signal, information, or data in the present disclosure are performed under the premise of complying with data protection regulations and policies corresponding to countries where the actions are located and with authorization given by an owner of a corresponding apparatus.

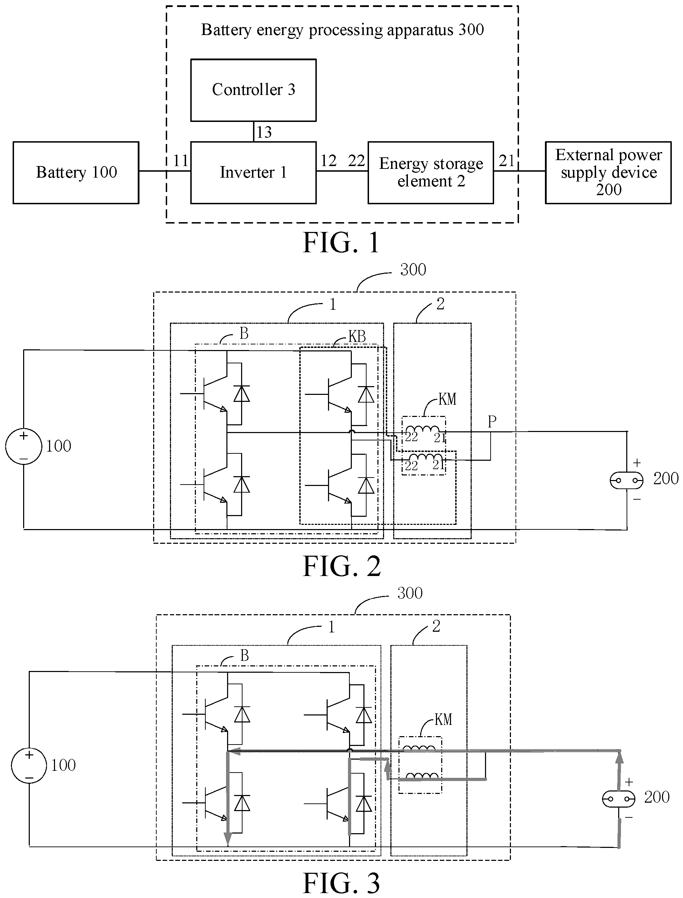

FIG. 1 is a structural block diagram of a battery energy processing apparatus according to an exemplary embodiment. As shown in FIG. 1, the battery energy processing apparatus 300 may include an inverter 1, an energy storage element 2, and a controller 3.

A first terminal 11 of the inverter 1 is configured to be connected to a battery 100. A first terminal 21 of the energy storage element 2 is configured to be connected to an external power supply device 200, and a second terminal 22 of the energy storage element 2 is connected to a second terminal 12 of the inverter 1. The controller 3 is connected to a third terminal 13 of the inverter 1. In a first preset state, the controller 3 controls the inverter 1 to enable the energy storage element 2 to be charged and discharged by the battery 100 (for example, to be cyclically charged and discharged) so as to realize self-heating of the battery 100. In a second preset state, at least part of the energy storage element 2 and at least part of the inverter 1 jointly form an adaptive voltage charger, and the controller 3 controls the adaptive voltage charger to charge the battery 100. The external power supply device 200 may be, for example, a charging pile or a storage battery.

The cyclic charging and discharging means that charging and discharging are switched repeatedly at a specific frequency. Through the cyclic charging and discharging of the battery, the battery may generate heat, thereby realizing the self-heating of the battery.

In the present disclosure, the first preset state is a battery self-heating state, and the second preset state is a battery charging state.

In the foregoing technical solution, the battery energy processing apparatus includes the inverter, the energy storage element, and the controller. The inverter is connected to the battery and the energy storage element. The energy storage element is connected to the external power supply device. In the first preset state, the controller controls the inverter to enable the energy storage element to be charged and discharged by the battery so as to realize the self-heating of the battery. In this way, in the first preset state, electricity in the battery may be cycled between the battery and the energy storage element by using the energy storage element to realize the charging and discharging of the battery. In this way, the self-heating of the battery is realized to better maintain the temperature of the battery and increase the electrolyte activity and the electrochemical reaction rate of a lithium-ion battery, thereby ensuring the driving capability of a driving system of an electric vehicle. In addition, the self-heating of the battery has a small energy loss, uniform heat transfer, and high heating efficiency. In addition, in the second preset state, at least part of the energy storage element and at least part of the inverter jointly form the adaptive voltage charger, and the controller controls the adaptive voltage charger to charge the battery. In other words, one battery energy processing apparatus is used for both battery charging and battery self-heating. In this way, the multifunctional reuse of the battery energy processing apparatus is realized, thereby reducing the costs and sizes of components.

As shown in FIG. 2, the inverter 1 includes N-phase bridge arms B, and the energy storage element 2 includes N coils KM. A quantity of at least one-phase bridge arm of the N-phase bridge arms B is the same as that of at least one coil of the N coils KM, and the at least one-phase bridge arm and the at least one coil jointly form the adaptive voltage charger.

For example, as shown in FIG. 2, one-phase bridge arm of the N-phase bridge arms B and one coil of the N coils KM jointly form the adaptive voltage charger KB.

As shown in FIG. 2, first bus terminals of the N-phase bridge arms B are connected to a positive electrode of the battery 100, and second bus terminals of the N-phase bridge arms B are connected to a negative electrode of the battery 100 and a negative electrode of the external power supply device 200. Second terminals 22 of the N coils KM are connected to midpoints of the N-phase bridge arms B in a one-to-one correspondence, first terminals 21 of the N coils KM are connected together to form a neutral point P, and the neutral point P is configured to be connected to a positive electrode of the external power supply device 200.

In this case, in the first preset state, the controller 3 controls at least two-phase bridge arms of the N-phase bridge arms B to enable coils connected to the at least two-phase bridge arms of the N coils KM to be charged and discharged by the battery 100 so as to realize the self-heating of the battery 100.

When a voltage of the external power supply device 200 is less than a voltage of the battery 100, in the second preset state, at least one-phase bridge arm of the N-phase bridge arms B and at least one coil of the N coils KM jointly form the adaptive voltage charger, and the controller 3 controls an upper bridge arm of the at least one-phase bridge arm to be turned off and a lower bridge arm of the at least one-phase bridge arm to be turned on to charge the at least one coil.

Optionally, in the first preset state, the controller 3 controls the N-phase bridge arms B to enable the N coils KM to be charged and discharged by the battery 100 so as to realize the self-heating of the battery 100. In this way, the N-phase bridge arms B and the N coils KM operate simultaneously, so that the heating efficiency can be maximized, thereby improving the battery self-heating effect.

In the second preset state, the N coils KM and the N-phase bridge arms B jointly form the adaptive voltage charger, and the controller 3 controls the adaptive voltage charger to charge the battery 100. In this way, the N-phase bridge arms B and the N coils operate simultaneously, so that the charging efficiency can be maximized, thereby improving the battery charging efficiency.

Although an example of N = 2 is used in FIG. 2, a person skilled in the art should understand that the quantity of bridge arms and the quantity of coils in FIG. 2 are merely an example.

In the first preset state, a specific process of heating the battery 100 by the battery energy processing apparatus 300 in FIG. 2 is as follows: the N coils KM are used as a current-limiting cushion apparatus, and a manner of turning on the N-phase bridge arms B is controlled, and a duty cycle of a bridge arm that is turned on is adjusted to control a loop current of the battery, to enable the internal resistance of the battery to generate heat to increase the temperature of the battery 100, thereby implementing the controlled temperature rise of the battery 100.

When a voltage of the external power supply device 200 is less than a voltage of the battery 100, in the second preset state, at least one-phase bridge arm of the N-phase bridge arms B and at least one coil of the N coils KM jointly form the adaptive voltage charger, and the controller 3 controls an upper bridge arm of the at least one-phase bridge arm to be turned off and a lower bridge arm of the at least one-phase bridge arm to be turned on to charge the at least one coil.

In the second preset state, at least one-phase bridge arm of the N-phase bridge arms B charges the battery 100. The battery 100 may be boost-charged or may be directly charged. A charging mode to use may be determined according to the voltage of the battery 100 and the voltage of the external power supply device 200.

Specifically, the controller 3 is further configured to detect whether the voltage of the external power supply device 200 is less than the voltage of the battery 100. When a voltage of the external power supply device 200 is less than a voltage of the battery 100, in the second preset state, at least one-phase bridge arm of the N-phase bridge arms B and at least one coil of the N coils KM jointly form the adaptive voltage charger, and the controller 3 controls an upper bridge arm of the at least one-phase bridge arm to be turned off and a lower bridge arm of the at least one-phase bridge arm to be turned on to charge the at least one coil, to charge a coil (i.e., at least one coil in the adaptive voltage charger) connected to the lower bridge arm that is turned on of the N coils KM. Next, the controller 3 further controls the lower bridge arm of the at least one-phase bridge arm correspondingly connected to the at least one coil to be turned off and controls a current to pass through a freewheeling diode of the upper bridge arm of the at least one-phase bridge arm to boost-charge the battery 100.

In an implementation, the controlling the current to pass through the freewheeling diode of the upper bridge arm of the at least one-phase bridge arm to boost-charge the battery 100 includes: controlling an insulated gate bipolar transistor of the upper bridge arm of the at least one-phase bridge arm not to be turned on to control the current to pass through the freewheeling diode of the upper bridge arm of the at least one-phase bridge arm to boost-charge the battery 100.

When the voltage of the external power supply device 200 is not less than the voltage of the battery 100, in the second preset state, the controller 3 controls insulated gate bipolar transistors of upper and lower bridge arms of the N-phase bridge arms B not to be turned on to control currents to pass through freewheeling diodes of upper bridge arms of the N-phase bridge arms B to directly charge the battery 100.

In this way, adaptive voltage charging may be automatically performed according to the voltage of the external power supply device 200 and the voltage of the battery 100. In this way, both a high-voltage external power supply device and a low-voltage external power supply device can realize the charging of a high-voltage battery through the battery energy processing apparatus 300 without additionally configuring a boost device.

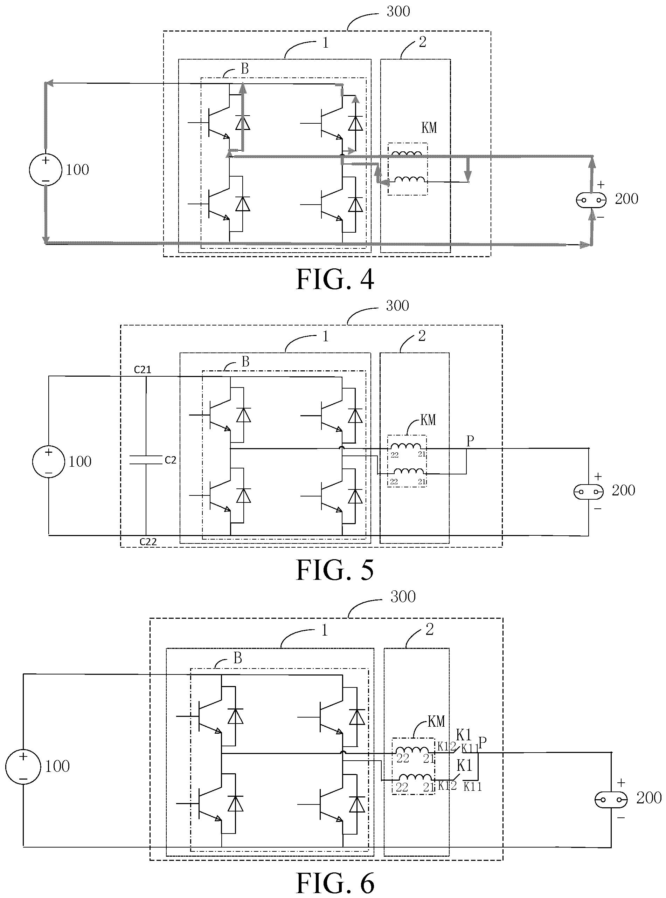

A working principle of boost-charging the battery 100 in the second preset state is described below in detail with reference to FIG. 3 and FIG. 4.

In FIG. 3, the controller 3 controls all upper bridge arms of the N-phase bridge arms B to be turned off and controls at least one-phase lower bridge arm of the N-phase bridge arms B to be turned on. In this case, a current flows from the positive electrode of the external power supply device 200 and sequentially flows through a coil of the N coils KM connected to the lower bridge arm that is turned on and the lower bridge arm that is turned on of the N-phase bridge arms B to return to the negative electrode of the external power supply device 200. In this way, the coil connected to the lower bridge arm that is turned on of the N coils KM can be charged. In addition, a charging current can be controlled by controlling a turn-on quantity and a turn-on duty cycle of lower bridge arms, thereby controlling a charging power.

In an example, it is assumed that the N-phase bridge arms B include two bridge arms b1 and b2, and the N coils KM include two coils H1 and H2. One end of the coil H1 is connected to a midpoint of the bridge arm b1, and one end of the coil H2 is connected to a midpoint of the bridge arm b2. Next, the controller 3 controls all upper bridge arms of the bridge arms b1 and b2 to be turned off, and controls all the lower bridge arms of the bridge arms b1 and b2 to be turned on. The positive electrode of the external power supply device 200, the N coils KM (i.e., the coils H1 and H2), all lower bridge arms (i.e., the lower bridge arms of the bridge arms b1 and b2) of the N-phase bridge arms B, and the negative electrode of the external power supply device 200 form a loop for charging the N coils KM.

Next, in FIG. 4, the controller 3 controls all the lower bridge arms of the N-phase bridge arms B to be turned off. In this case, a current flows from the positive electrode of the external power supply device 200 and sequentially flows through the N coils KM, freewheeling diodes of all the upper bridge arms of the N-phase bridge arms B, the positive electrode of the battery 100, and the negative electrode of the battery 100 to return to the negative electrode of the external power supply device 200. In this way, energy of the external power supply device 200 and the N coils KM can be transferred to the battery 100, to realize that the N coils KM and the external power supply device 200 charge the battery 100 simultaneously, i.e., realize boost-charging of the battery 100.

The foregoing example is still used. In the foregoing example, all the lower bridge arms of the bridge arms b1 and b2 are turned on. Therefore, in this case, all the lower bridge arms of the N-phase bridge arms B (i.e., all the upper bridge arms of the bridge arms b1 and b2) are turned off. The positive electrode of the external power supply device 200, the N coils KM (i.e., the coils H1 and H2), the freewheeling diodes of all the upper bridge arms of the N-phase bridge arms B (i.e., the upper bridge arms of the bridge arms b1 and b2), the battery 100, and the negative electrode of the external power supply device 200 form a loop that transfers energy in the N coils KM and energy received by the external power supply device to the battery 100, i.e., the N coils KM and the external power supply device 200 charge the battery 100.

Therefore, cyclic work in the states in FIG. 3 and FIG. 4 is realized by controlling an upper bridge arm of the at least one-phase bridge arm of the N-phase bridge arms B to be turned off and a lower bridge arm of the at least one-phase bridge arm to be alternately turned on or off, to complete the boost-charging of the battery 100.

A working principle of directly charging the battery 100 in the second preset state is described below in detail with reference to FIG. 4.

In a case that the voltage of the external power supply device 200 is not less than the voltage of the battery 100, it is not necessary to boost-charge the external power supply device. In this case, as shown in FIG. 4, the controller 3 may control all the lower bridge arms of the N-phase bridge arms B to be turned off. In this case, a current flows from the positive electrode of the external power supply device 200 and sequentially flows through the N coils KM, freewheeling diodes of all the upper bridge arms of the N-phase bridge arms B, the positive electrode of the battery 100, and the negative electrode of the battery 100 to return to the negative electrode of the external power supply device 200. In this way, energy of the external power supply device 200 can be transferred to the battery 100, to realize that the external power supply device 200 charges the battery 100, i.e., realize direct charging of the battery 100.

In an embodiment, the N coils KM are motor windings (for example, motor windings of a driving motor), and the N-phase bridge arms B are bridge arm converters. That is, existing motor windings and bridge arm converters on a vehicle are reused, so that different functions can be realized as required. For example, when the battery requires self-heating or charging, the N coils KM and the N-phase bridge arms B can be used in various self-heating procedures described in the present disclosure. When the vehicle needs to be driven, the N coils KM and the N-phase bridge arms B can be switched to control the bridge arms B to enable the motors corresponding to the motor windings to output a power, thereby driving the vehicle. In this way, the motor windings and the bridge arm converters of the vehicle can be reused to realize different functions as required, and the costs of the vehicle are reduced.

In addition, as shown in FIG. 5, the battery energy processing apparatus 300 may further include a second capacitor C2. A first terminal C21 of the second capacitor C2 is connected to the positive electrode of the battery 100 and the first bus terminals of the N-phase bridge arms B, and a second terminal C22 of the second capacitor C2 is connected to the negative electrode of the battery 100 and the second bus terminals of the N-phase bridge arms B. The second capacitor C2 has a voltage stabilization effect, so that an impact on the components in the battery energy processing apparatus 300 by a spike generated at the instant when the battery energy processing apparatus 300 and the battery 100 or the external power supply device 200 are turned on can be avoided.

In addition, the battery energy processing apparatus 300 may further include a third switch K3 and a fourth switch K4 (neither is shown in the figures). A first terminal of the third switch K3 is connected to the neutral point, and a second terminal of the third switch K3 is connected to the positive electrode of the external power supply device 200. A first terminal of the fourth switch K4 is connected to the negative electrode of the battery 100, and a second terminal of the fourth switch K4 is connected to the negative electrode of the external power supply device 200.

In this case, in the first preset state, the controller 3 controls both the third switch K3 and the fourth switch K4 to open, and controls at least two-phase bridge arms of the N-phase bridge arms B to enable coils connected to the at least two-phase bridge arms of the N coils KM to be charged and discharged by the battery 100 so as to realize the self-heating of the battery 100; and in the second preset state, controls both the third switch K3 and the fourth switch K4 to close, and controls the adaptive voltage charger to charge the battery 100.

As shown in FIG. 6, the battery energy processing apparatus 300 further includes N first switches K1. First terminals K11 of the N first switches K1 are configured to be connected to the positive electrode of the external power supply device 200, and second terminals K12 of the N first switches K1 are connected to the first terminals 21 of the N coils KM in a one-to-one correspondence.

In this case, in the first preset state, the controller 3 controls first switches K1 of the N first switches K1 correspondingly connected to at least two coils of the N coils KM to close, and controls at least two-phase bridge arms connected to the at least two coils of the N-phase bridge arms B to enable the at least two coils to be charged and discharged by the battery 100 so as to realize the self-heating of the battery 100. In the second preset state, at least one coil of the N coils KM and at least one-phase bridge arm correspondingly connected to the at least one coil jointly form the adaptive voltage charger, and the controller 3 controls a first switch K1 of the N first switches K1 correspondingly connected to the at least one coil to close, and controls the adaptive voltage charger to charge the battery 100.

In addition, for the battery energy processing apparatus 300 shown in FIG. 6, the controller 3 may be further configured to: in the second preset state, detect whether every phase of bridge arm in the N-phase bridge arms B has a fault. In the second preset state, a non-faulty bridge arm of the N-phase bridge arms B and a coil of the N coils KM connected to the non-faulty bridge arm jointly form the adaptive voltage charger, and the controller 3 controls a first switch K1 correspondingly connected to a coil connected to a faulty bridge arm of the N first switches K1 to open, controls a first switch K1 of the N first switches K1 correspondingly connected to a coil connected to a non-faulty bridge arm to close, and controls the adaptive voltage charger to charge the battery 100. In this way, if a phase of bridge arm of the N-phase bridge arms B has a fault, the faulty bridge arm can be turned off through a first switch K1 correspondingly connected thereto, to turn off a channel of the phase of bridge arm. Channels formed by other phases of bridge arms with normal functions are used to complete the charging of the battery, thereby improving the redundancy and fault tolerance performance of the battery energy processing apparatus 300.

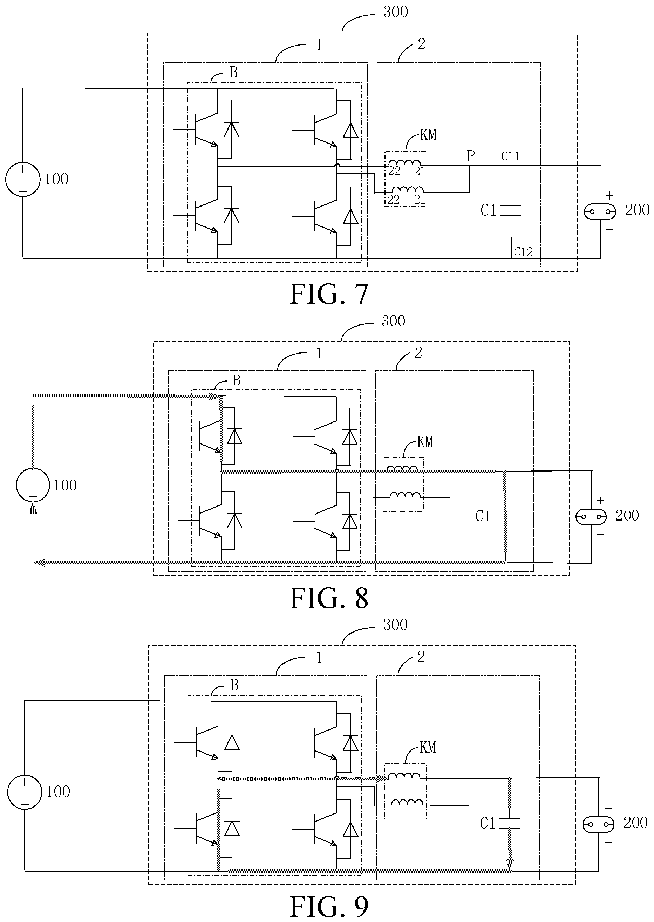

As shown in FIG. 7, the energy storage element 2 further includes a first capacitor C1. A first terminal C11 of the first capacitor C1 is connected to the neutral point P and the positive electrode of the external power supply device 200, and a second terminal C12 of the first capacitor C1 is connected to the negative electrode of the battery 100 and the negative electrode of the external power supply device 200.

In this case, in the first preset state, the controller 3 controls at least one-phase bridge arm of the N-phase bridge arms B to enable the first capacitor C1 to be charged and discharged by the battery 100 so as to realize the self-heating of the battery 100. In the second preset state, at least one coil of the N coils KM and at least one-phase bridge arm correspondingly connected to the at least one coil jointly form the adaptive voltage charger, and the controller 3 controls the adaptive voltage charger to charge the battery 100.

A process of heating the battery 100 by using the N-phase bridge arms B, the N coils KM, and the first capacitor C1 in FIG. 7 in the first preset state is described below in detail with reference to FIG. 8 to FIG. 11.

First, as shown in FIG. 8, in a first process, the controller 3 may control all the lower bridge arms of the N-phase bridge arms B to be turned off, and control at least one upper bridge arm of the N-phase bridge arms B to be turned on. In this case, a current flows from the positive electrode of the battery 100, flows through the upper bridge arm that is turned on, a coil connected to the upper bridge arm that is turned on, and the first capacitor C1, and finally returns to the negative electrode of the battery 100. In the process, the battery 100 is in a discharging state, the first capacitor C1 receives energy of the coil connected to the upper bridge arm that is turned on, and the voltage keeps increasing, thereby realizing energy storage.

Next, as shown in FIG. 9, in a second process, the controller 3 may control all the upper bridge arms of the N-phase bridge arms B to be turned off, and control a lower bridge arm connected to a coil with a freewheeling current in the lower bridge arms of the N-phase bridge arms B to be turned on. In this case, a current flows from the coil with a freewheeling current, flows through the first capacitor C1 and the lower bridge arm that is turned on, and finally returns to the coil with a freewheeling current. In the process, due to the freewheeling effect of the coil, the first capacitor C1 continues to receive energy of the coil, and the voltage keeps increasing.

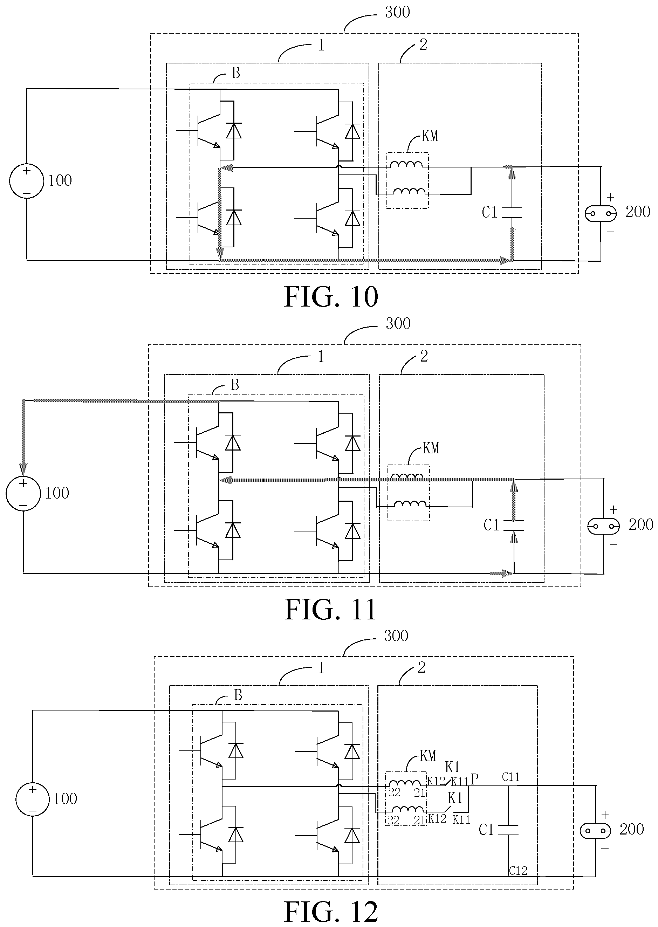

As shown in FIG. 10, in a third process, as a voltage across the two terminals of the first capacitor C1 keeps increasing, the first capacitor C1 automatically switches from receiving energy of the coils KM to releasing energy to the coils KM. In this case, a current flows from the first capacitor C1, flows through the coil connected to the lower bridge arm that is turned on and the lower bridge arm that is turned on, and finally returns to the first capacitor C1. In the process, the voltage across the two terminals of the first capacitor C1 keeps decreasing.

Next, as shown in FIG. 11, in a fourth process, the controller 3 may control all the lower bridge arms of the N-phase bridge arms B to be turned off, and control at least one upper bridge arm of the N-phase bridge arms B to be turned on. In this case, a current flows from the first capacitor C1, flows through the coil connected to the upper bridge arm that is turned on, the upper bridge arm that is turned on, the positive electrode of the battery 100, and the negative electrode of the battery 100, and finally returns to the first capacitor C1. In the process, the battery 100 is in a charging state.

As the voltage across the two terminals of the first capacitor C1 keeps decreasing, the first capacitor C1 and the coil connected to the upper bridge arm that is turned on switch from releasing energy to the battery 100 to receiving energy of the battery 100. In this case, a flowing direction of the current becomes the flowing direction in the first process again, and the battery 100 starts discharging.

The foregoing processes repeat continuously, so that quick cyclic charging/discharging can be performed between the first capacitor C1 and the battery 100. Due to the presence of the internal resistance of the battery, a large amount of heat is generated to quickly increase the temperature of the battery, thereby improving the heating efficiency of the battery.

As shown in FIG. 12, the apparatus further includes the N first switches K1. The first terminals K11 of the N first switches K1 are configured to be connected to the positive electrode of the external power supply device 200, and the second terminals K12 of the N first switches K1 are connected to the first terminals 21 of the N coils KM in a one-to-one correspondence. In this case, the controller 3 may be further configured to detect whether every phase of bridge arm in the N-phase bridge arms B has a fault. In this case, in the first preset state, the controller 3 controls a first switch K1 of the N first switches K1 correspondingly connected to a coil connected to a faulty bridge arm to open, controls a first switch K1 of the N first switches K1 correspondingly connected to a coil connected to a non-faulty bridge arm to close, and controls a non-faulty bridge arm of the N-phase bridge arms B to enable the first capacitor C1 to be charged and discharged by the battery 100 so as to realize the self-heating of the battery 100.

In this way, if a phase of bridge arm of the N-phase bridge arms B has a fault, the faulty bridge arm can be turned off through a first switch K1 correspondingly connected thereto, to turn off a channel of the phase of bridge arm. Channels formed by other phases of bridge arms with normal functions are used to complete the self-heating of the battery, thereby improving the redundancy and fault tolerance performance of the battery energy processing apparatus 300.

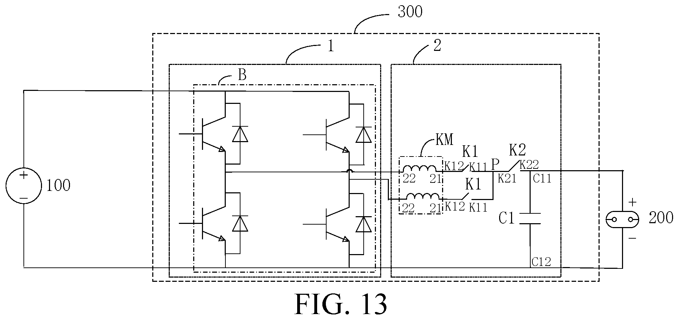

As shown in FIG. 13, the battery energy processing apparatus 300 may further include the N first switches K1 and the second switch K2. The energy storage element 2 further includes the first capacitor C1. The first terminals K11 of the N first switches K1 are configured to be connected to the positive electrode of the external power supply device 200, and the second terminals K12 of the N first switches K1 are connected to the first terminals 21 of the N coils KM in a one-to-one correspondence. A first terminal K21 of the second switch K2 is connected to the neutral point P, and a second terminal K22 of the second switch K2 is configured to be connected to the positive electrode of the external power supply device 200. The first terminal C11 of the first capacitor C1 is connected to the neutral point P and the positive electrode of the external power supply device 200, and the second terminal C12 of the first capacitor C1 is connected to the negative electrode of the battery 100 and the negative electrode of the external power supply device 200.

In this case, in the first preset state, in response to receiving a first control instruction configured for indicating to perform inductive self-heating on the battery 100, the controller 3 controls first switches K1 of the N first switches K1 correspondingly connected to at least two coils of the N coils KM to close, controls the second switch K2 to open, and controls at least two-phase bridge arms connected to the at least two coils of the N-phase bridge arms B to enable the at least two coils to be charged and discharged by the battery 100 so as to realize the self-heating of the battery 100. In the first preset state, in response to receiving a second control instruction configured for indicating to perform capacitive self-heating on the battery 100, the controller 3 controls a first switch K1 of the N first switches K1 correspondingly connected to a coil connected to at least one-phase bridge arm to close, controls the second switch K2 to close, and controls the at least one-phase bridge arm of the N-phase bridge arms B to enable the first capacitor C1 to be charged and discharged by the battery 100 so as to realize the self-heating of the battery 100.

In this way, there are two battery heating manners, i.e., an inductive self-heating manner and a capacitive self-heating manner. In this way, a user needs to select an appropriate battery heating manner as required, thereby improving user experience.

Although an example of N = 2 is used in FIG. 3 to FIG. 13, a person skilled in the art should understand that the quantity of bridge arms and the quantity of coils in the figures are merely an example.

The present disclosure further provides a battery energy processing method. The method includes:
in a first preset state, controlling an inverter to enable an energy storage element to be charged and discharged by a battery so as to realize self-heating of the battery; and
in a second preset state, making at least part of the energy storage element and at least part of the inverter jointly form an adaptive voltage charger, and controlling the adaptive voltage charger to charge the battery.

A first terminal of the inverter is configured to be connected to the battery, and a second terminal is connected to a second terminal of the energy storage element.

A first terminal of the energy storage element is configured to be connected to an external power supply device.

Through the foregoing technical solution, in the first preset state, electricity in the battery may be cycled between the battery and the energy storage element by using the energy storage element to realize the charging and discharging of the battery. In this way, the self-heating of the battery is realized to better maintain the temperature of the battery and increase the electrolyte activity and the electrochemical reaction rate of a lithium-ion battery, thereby ensuring the driving capability of a driving system of an electric vehicle. In addition, the self-heating of the battery has a small energy loss, uniform heat transfer, and high heating efficiency. In addition, in the second preset state, the foregoing battery energy processing apparatus may further reuse the energy storage element and the inverter to form the adaptive voltage charger, and control the inverter to charge the battery. In other words, one battery energy processing apparatus is used for both battery charging and battery self-heating. In this way, the multifunctional reuse of the battery energy processing apparatus is realized, thereby reducing the costs and sizes of components.

Optionally, the inverter includes at least two-phase bridge arms, the energy storage element includes at least two coils, a quantity of the at least two-phase bridge arms is the same as that of the at least two coils, a quantity of at least one-phase bridge arm of the at least two-phase bridge arms is the same as that of at least one coil of the at least two coils, and the at least one-phase bridge arm and the at least one coil jointly form the adaptive voltage charger.

Optionally, first bus terminals of the at least two-phase bridge arms are connected to a positive electrode of the battery, and second bus terminals of the at least two-phase bridge arms are connected to a negative electrode of the battery and a negative electrode of the external power supply device.

Second terminals of the at least two coils are connected to midpoints of the at least two-phase bridge arms, first terminals of the at least two coils are connected together to form a neutral point, and the neutral point is configured to be connected to a positive electrode of the external power supply device.

The controlling an inverter to enable an energy storage element to be charged and discharged by a battery includes:
controlling at least two-phase bridge arms of the at least two-phase bridge arms to enable coils connected to the at least two-phase bridge arms of the at least two coils to be charged and discharged by the battery so as to realize the self-heating of the battery.

The making at least part of the energy storage element and at least part of the inverter jointly form an adaptive voltage charger, and controlling the adaptive voltage charger to charge the battery includes:
making at least one-phase bridge arm of the at least two-phase bridge arms and at least one coil of the at least two coils jointly form the adaptive voltage charger, and controlling an upper bridge arm of the at least one-phase bridge arm to be turned off and a lower bridge arm of the at least one-phase bridge arm to be turned on to charge the at least one coil.

Optionally, the method further includes:
when a voltage of the external power supply device is less than a voltage of the battery, in the second preset state, after the at least one coil is charged, controlling the lower bridge arm of the at least one-phase bridge arm to be turned off, and controlling a current to pass through a freewheeling diode of the upper bridge arm of the at least one-phase bridge arm to boost-charge the battery.

Optionally, the controlling a current to pass through a freewheeling diode of the upper bridge arm of the at least one-phase bridge arm to boost-charge the battery includes: controlling an insulated gate bipolar transistor of the upper bridge arm of the at least one-phase bridge arm not to be turned on to control the current to pass through the freewheeling diode of the upper bridge arm of the at least one-phase bridge arm to boost-charge the battery.

Optionally, the method further includes:
when the voltage of the external power supply device is not less than the voltage of the battery, in the second preset state, controlling insulated gate bipolar transistors of upper and lower bridge arms of the at least two-phase bridge arms not to be turned on to control currents to pass through freewheeling diodes of upper bridge arms of the at least two-phase bridge arms to directly charge the battery.

Optionally, first terminals of at least two first switches are configured to be connected to the positive electrode of the external power supply device, and second terminals of the at least two first switches are connected to the first terminals of the at least two coils in a one-to-one correspondence.

The controlling at least two-phase bridge arms of the at least two-phase bridge arms to enable coils connected to the at least two-phase bridge arms of the at least two coils to be charged and discharged by the battery includes:
controlling first switches of the at least two first switches correspondingly connected to at least two coils of the at least two coils to close, and controlling at least two-phase bridge arms connected to the at least two coils of the at least two-phase bridge arms to enable the at least two coils to be charged and discharged by the battery so as to realize the self-heating of the battery.

The making at least one-phase bridge arm of the at least two-phase bridge arms and at least one coil of the at least two coils jointly form the adaptive voltage charger, and controlling an upper bridge arm of the at least one-phase bridge arm to be turned off and a lower bridge arm of the at least one-phase bridge arm to be turned on to charge the at least one coil includes:
making at least one coil of the at least two coils and at least one-phase bridge arm correspondingly connected to the at least one coil jointly form the adaptive voltage charger, controlling a first switch of the at least two first switches correspondingly connected to the at least one coil to close, and controlling the adaptive voltage charger to charge the battery.

Optionally, first terminals of at least two first switches are configured to be connected to the positive electrode of the external power supply device, and second terminals of the at least two first switches are connected to the first terminals of the at least two coils in a one-to-one correspondence.

The making at least one-phase bridge arm of the at least two-phase bridge arms and at least one coil of the at least two coils jointly form the adaptive voltage charger, and controlling an upper bridge arm of the at least one-phase bridge arm to be turned off and a lower bridge arm of the at least one-phase bridge arm to be turned on to charge the at least one coil includes:
making a non-faulty bridge arm of the at least two-phase bridge arms and a coil of the at least two coils connected to the non-faulty bridge arm jointly form the adaptive voltage charger, controlling a first switch of the at least two first switches correspondingly connected to a coil connected to a faulty bridge arm to open, controlling a first switch of the at least two first switches correspondingly connected to a coil connected to a non-faulty bridge arm to close, and controlling the adaptive voltage charger to charge the battery.

Optionally, the energy storage element further includes a first capacitor. A first terminal of the first capacitor is connected to the neutral point and the positive electrode of the external power supply device, and a second terminal of the first capacitor is connected to the negative electrode of the battery and the negative electrode of the external power supply device.

The controlling an inverter to enable an energy storage element to be charged and discharged by a battery includes:
controlling at least one-phase bridge arm of the at least two-phase bridge arms to enable the first capacitor to be charged and discharged by the battery so as to realize the self-heating of the battery.

The making at least part of the energy storage element and at least part of the inverter jointly form an adaptive voltage charger, and controlling the adaptive voltage charger to charge the battery includes:
making at least one coil of the at least two coils KM and at least one-phase bridge arm correspondingly connected to the at least one coil jointly form the adaptive voltage charger, and controlling the adaptive voltage charger to charge the battery.

Optionally, first terminals of at least two first switches are configured to be connected to the positive electrode of the external power supply device, and second terminals of the at least two first switches are connected to the first terminals of the at least two coils in a one-to-one correspondence.

The controlling an inverter to enable an energy storage element to be charged and discharged by a battery includes:
controlling a first switch of the at least two first switches correspondingly connected to a coil connected to a faulty bridge arm to open, controlling a first switch of the at least two first switches correspondingly connected to a coil connected to a non-faulty bridge arm to close, and controlling a non-faulty bridge arm of the at least two-phase bridge arms to enable the first capacitor to be charged and discharged by the battery so as to realize the self-heating of the battery.

Optionally, first terminals of at least two first switches are configured to be connected to the positive electrode of the external power supply device, and second terminals of the at least two first switches are connected to the first terminals of the at least two coils in a one-to-one correspondence.

The energy storage element further includes the first capacitor. The first terminal of the first capacitor is connected to the neutral point and the positive electrode of the external power supply device, and the second terminal of the first capacitor is connected to the negative electrode of the battery and the negative electrode of the external power supply device.

The controlling an inverter to enable an energy storage element to be charged and discharged by a battery includes:
in response to receiving a first control instruction configured for indicating to perform inductive self-heating on the battery, controlling first switches of the at least two first switches correspondingly connected to at least two coils of the at least two coils to close, controlling a second switch to open, and controlling at least two-phase bridge arms connected to the at least two coils of the at least two-phase bridge arms to enable the at least two coils to be charged and discharged by the battery so as to realize the self-heating of the battery, where a first terminal of the second switch is connected to the neutral point, and a second terminal of the second switch is configured to be connected to the positive electrode of the external power supply device; and
in response to receiving a second control instruction configured for indicating to perform capacitive self-heating on the battery, controlling a first switch of the at least two first switches correspondingly connected to a coil connected to at least one-phase bridge arm to close, controlling the second switch to close, and controlling the at least one-phase bridge arm of the at least two-phase bridge arms to enable the first capacitor to be charged and discharged by the battery so as to realize the self-heating of the battery.

Specific implementations of the steps in the battery energy processing method according to embodiments of the present disclosure have been described in detail in the battery energy processing apparatus according to embodiments of the present disclosure. Details are not described herein again.

In addition, the present disclosure further provides a vehicle, including a battery and the foregoing battery energy processing apparatus provided in the present disclosure.

The exemplary embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

It should be further noted that the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. A battery energy processing apparatus (300), comprising:
an inverter (1), a first terminal of the inverter (1) being configured to be connected to a battery (100);
an energy storage element (2), a first terminal of the energy storage element (2) being configured to be connected to an external power supply device (200), and a second terminal of the energy storage element (2) being connected to a second terminal of the inverter (1); and
a controller (3), the controller (3) being connected to a third terminal of the inverter (1),
wherein in a first preset state, the controller (3) controls the inverter (1) to enable the energy storage element (2) to be charged and discharged by the battery (100) so as to realize self-heating of the battery (100); and
in a second preset state, at least part of the energy storage element (2) and at least part of the inverter (1) jointly form an adaptive voltage charger, and the controller (3) controls the adaptive voltage charger to charge the battery (100).

2. The apparatus (300) according to claim 1, wherein the inverter (1) comprises at least two-phase bridge arms (B), the energy storage element (2) comprises at least two coils (KM), a quantity of the at least two-phase bridge arms (B) is the same as that of the at least two coils (KM), a quantity of at least one-phase bridge arm of the at least two-phase bridge arms (B) is the same as that of at least one coil of the at least two coils (KM), and the at least one-phase bridge arm and the at least one coil jointly form the adaptive voltage charger.

3. The apparatus (300) according to claim 2, wherein first bus terminals of the at least two-phase bridge arms (B) are connected to a positive electrode of the battery (100), and second bus terminals of the at least two-phase bridge arms (B) are connected to a negative electrode of the battery (100) and a negative electrode of the external power supply device (200); and
second terminals of the at least two coils (KM) are connected to midpoints of the at least two -phase bridge arms (B) in a one-to-one correspondence, first terminals of the at least two coils (KM) are connected together to form a neutral point, and the neutral point is configured to be connected to a positive electrode of the external power supply device (200).

4. The apparatus (300) according to claim 2, wherein in the first preset state, the controller (3) controls at least two-phase bridge arms of the at least two-phase bridge arms (B) to enable coils connected to the at least two-phase bridge arms of the at least two coils (KM) to be charged and discharged by the battery (100) so as to realize the self-heating of the battery (100).

5. The apparatus (300) according to claim 3, wherein
when a voltage of the external power supply device (200) is less than a voltage of the battery (100), in the second preset state, at least one-phase bridge arm of the at least two-phase bridge arms (B) and at least one coil of the at least two coils (KM) jointly form the adaptive voltage charger, and the controller (3) controls an upper bridge arm of the at least one-phase bridge arm to be turned off and a lower bridge arm of the at least one-phase bridge arm to be turned on to charge the at least one coil.

6. The apparatus (300) according to claim 5, wherein when the voltage of the external power supply device (200) is less than the voltage of the battery (100), in the second preset state, after the at least one coil is charged, the controller (3) further controls the lower bridge arm of the at least one-phase bridge arm to be turned off and controls a current to pass through a freewheeling diode of the upper bridge arm of the at least one-phase bridge arm to boost-charge the battery (100).

7. The apparatus (300) according to claim 6, wherein the controlling the current to pass through the freewheeling diode of the upper bridge arm of the at least one-phase bridge arm to boost-charge the battery (100) comprises: controlling an insulated gate bipolar transistor of the upper bridge arm of the at least one-phase bridge arm not to be turned on to control the current to pass through the freewheeling diode of the upper bridge arm of the at least one-phase bridge arm to boost-charge the battery (100).

8. The apparatus (300) according to claim 5, wherein when the voltage of the external power supply device (200) is not less than the voltage of the battery (100), in the second preset state, the controller (3) controls insulated gate bipolar transistors of upper and lower bridge arms of the at least two-phase bridge arms (B) not to be turned on to control currents to pass through freewheeling diodes of upper bridge arms of the at least two-phase bridge arms (B) to directly charge the battery (100).

9. The apparatus (300) according to any one of claims 3 to 8, further comprising:
at least two first switches (K1), first terminals of the at least two first switches (K1) being configured to be connected to the positive electrode of the external power supply device (200), and second terminals of the at least two first switches (K1) being connected to the first terminals of the at least two coils (KM) in a one-to-one correspondence.

10. The apparatus (300) according to claim 9, wherein
in the first preset state, the controller (3) controls first switches (K1) of the at least two first switches (K1) correspondingly connected to at least two coils of the at least two coils (KM) to close, and controls at least two-phase bridge arms connected to the at least two coils of the at least two-phase bridge arms (B) to enable the at least two coils to be charged and discharged by the battery (100) so as to realize the self-heating of the battery (100); and
in the second preset state, at least one coil of the at least two coils (KM) and at least one-phase bridge arm correspondingly connected to the at least one coil jointly form the adaptive voltage charger, and the controller (3) controls a first switch (K1) of the at least two first switches (K1) correspondingly connected to the at least one coil to close, and controls the adaptive voltage charger to charge the battery (100).

11. The apparatus (300) according to claim 9 or 10, wherein
in the second preset state, a non-faulty bridge arm of the at least two-phase bridge arms (B) and a coil of the at least two coils (KM) connected to the non-faulty bridge arm jointly form the adaptive voltage charger, and the controller (3) controls a first switch (K1) of the at least two first switches (K1) correspondingly connected to a coil connected to a faulty bridge arm to open, controls a first switch (K1) of the at least two first switches (K1) correspondingly connected to a coil connected to a non-faulty bridge arm to close, and controls the adaptive voltage charger to charge the battery (100).

12. The apparatus (300) according to any one of claims 3 to 11, wherein the energy storage element (2) further comprises a first capacitor (C1),
a first terminal of the first capacitor (C1) being connected to the neutral point and the positive electrode of the external power supply device (200), and a second terminal of the first capacitor (C1) being connected to the negative electrode of the battery (100) and the negative electrode of the external power supply device (200).

13. The apparatus (300) according to claim 12, wherein
in the first preset state, the controller (3) controls at least one-phase bridge arm of the at least two-phase bridge arms (B) to enable the first capacitor (C1) to be charged and discharged by the battery (100) so as to realize the self-heating of the battery (100); and
in the second preset state, at least one coil of the at least two coils (KM) and at least one-phase bridge arm correspondingly connected to the at least one coil jointly form the adaptive voltage charger, and the controller (3) controls the adaptive voltage charger to charge the battery (100).

14. The apparatus (300) according to claim 12 or 13, further comprising:
the at least two first switches (K1), the first terminals of the at least two first switches (K1) being configured to be connected to the positive electrode of the external power supply device (200), and the second terminals of the at least two first switches (K1) being connected to the first terminals of the at least two coils (KM) in a one-to-one correspondence; and
in the first preset state, the controller (3) controls a first switch (K1) of the at least two first switches (K1) correspondingly connected to a coil connected to a faulty bridge arm to open, controls a first switch (K1) of the at least two first switches (K1) correspondingly connected to a coil connected to a non-faulty bridge arm to close, and controls a non-faulty bridge arm of the at least two-phase bridge arms (B) to enable the first capacitor (C1) to be charged and discharged by the battery (100) so as to realize the self-heating of the battery (100).

15. The apparatus (300) according to any one of claims 3 to 14, further comprising:
the at least two first switches (K1), the first terminals of the at least two first switches (K1) being configured to be connected to the positive electrode of the external power supply device (200), and the second terminals of the at least two first switches (K1) being connected to the first terminals of the at least two coils (KM) in a one-to-one correspondence; and
a second switch (K2), a first terminal of the second switch (K2) being connected to the neutral point, and a second terminal of the second switch (K2) being configured to be connected to the positive electrode of the external power supply device (200),
the energy storage element (2) further comprising the first capacitor (C1), wherein the first terminal of the first capacitor (C1) is connected to the neutral point and the positive electrode of the external power supply device (200), and the second terminal of the first capacitor (C1) is connected to the negative electrode of the battery (100) and the negative electrode of the external power supply device (200);
in the first preset state, in response to receiving a first control instruction configured for indicating to perform inductive self-heating on the battery (100), the controller (3) controls first switches (K1) of the at least two first switches (K1) correspondingly connected to at least two coils of the at least two coils (KM) to close, controls the second switch (K2) to open, and controls at least two-phase bridge arms connected to the at least two coils of the at least two-phase bridge arms (B) to enable the at least two coils to be charged and discharged by the battery (100) so as to realize the self-heating of the battery (100); and
in the first preset state, in response to receiving a second control instruction configured for indicating to perform capacitive self-heating on the battery (100), the controller (3) controls a first switch (K1) of the at least two first switches (K1) correspondingly connected to a coil connected to at least one-phase bridge arm to close, controls the second switch (K2) to close, and controls the at least one-phase bridge arm of the at least two-phase bridge arms (B) to enable the first capacitor (C1) and the battery (100) to be charged and discharged by the battery (100) so as to realize the self-heating of the battery (100).

16. A vehicle, comprising:
a battery (100); and
the battery energy processing apparatus (300) according to any one of claims 1 to 15.
